# EUROPÄISCHE PATENTSCHRIFT

(11) **EP 1 460 285 B1**
(45) Veröffentlichungstag und Bekanntmachung des Hinweises auf die Patenterteilung: **03.05.2006**
(21) Anmeldenummer: 03290698.4
(22) Anmeldetag: 18.03.2003
(51) Int. Cl.: F16C 1/14, F16C 11/04

(54) **Bowdenzug**
Bowden cable
Câble Bowden

(43) Veröffentlichungstag der Anmeldung: 22.09.2004
(73) Patentinhaber: Behr France Rouffach SAS, 68250 Rouffach (FR)
(72) Erfinder: Beringer, Hervé, 68127 Oberhergheim (FR); Ludmann, Eric, 68000 Colmar (FR)
(74) Vertreter: Grauel, Andreas

(56) Entgegenhaltungen:
- DE-U- 8 020 964
- US-A- 3 253 480
- US-A- 3 426 613
- US-A- 3 695 652
- US-A- 5 709 498

## Beschreibung

Die Erfindung betrifft einen Bowdenzug gemäß dem Oberbegriff des Anspruchs 1.

Es sind eine Vielzahl von Verbindungen zwischen einer Seele eines Bowdenzugs mit einem an einem Ende derselben angebrachten Verbindungsteil bekannt, wobei die Seele einen veränderlichen Querschnitt aufweist, so dass eine formschlüssige Verbindung mit dem Verbindungsteil möglich ist. Derartige Verbindungen sind relativ aufwändig herzustellen.

Ferner besteht bei herkömmlichen Bowdenzügen das Risiko, dass die Seele bei der Montage abknickt. Um ein Abknicken zu vermeiden, zeigt die DE 80 20 964 U1 ein Verbindungselement zur Anbringung an einem Kabel, Seil oder dergleichen, das durch ein aus Kunststoff am Kabel angespritztes Anschlussstück gebildet wird und bei dem die Ebene eines Betätigungselements o.ä. in Verlängerung der Längsachse des Kabels verläuft. Hierbei ist das Verbindungselement leicht U-förmig ausgebildet, wobei das Verbindungselement eine Art Clips-Verbindung mit einem Zapfen zur schwenkbaren Anbringung an einem Betätigungselement aufweist. Dabei ist der Zapfen senkrecht zur Längsachse des Kabels angeordnet.

Es ist Aufgabe der Erfindung, einen verbesserten Bowdenzug zur Verfügung zu stellen, bei dem ein Abknicken der Seele bei der Montage auf einfache Weise verhindert wird.

Diese Aufgabe wird gelöst durch einen Bowdenzug mit den Merkmalen des Anspruchs 1. Vorteilhafte Ausgestaltungen sind Gegenstand der Unteransprüche.

Erfindungsgemäß verläuft die Seele des Bowdenzugs an einem ihrer Enden in einem Winkel gebogen L-förmig im Verbindungsteil eingespritzt, mit dem sie mit dem Betätigungselement, bspw. einem Hebel oder einer Kurvenscheibe, verbunden ist. Dabei beträgt der Winkel vorzugsweise 90° +/- 10°, insbesondere 90°. Die Umlenkung, insbesondere die Umlenkuhg um 90°, erhöht die Belastbarkeit der Verbindung Seele - Verbindungsteil, so dass keine zusätzlichen Maßnahmen zur Sicherung der Seele im Verbindungsteil, wie bspw. Vorsprünge an der Seele, erforderlich sind. Zusätzliche Sicherungen können aber vorgesehen sein.

Das Verbindungsteil ist vorzugsweise an dem Betätigungselement schwenkbar angebracht, insbesondere mittels eines Zapfens, der in eine Öffnung im Betätigungselement eingeführt und hierin schwenkbar angebracht ist, bspw. mittels einer Clips-Verbindung. Eine derartige Verbindung lässt sich einfach herstellen und insbesondere schnell montieren.

Vorzugsweise ist die Seele bis in den Zapfen geführt, wodurch die Festigkeit desselben unter anderem etwas erhöht wird. Ferner ergibt sich hieraus eine kompakte Bauweise, und eine maximale Kontaktfläche zwischen Seele und Verbindungsteil kann zur Erhöhung der Sicherheit der Verbindung Seele - Verbindungsteil ausgenutzt werden.

Lässt man die Seele bis zum Ende des Zapfens oder leicht darüber hinaus ragen, oder schneidet man den die Seele bildenden Draht erst nach dem Spritzen des Verbindungsteils ab, so kann eine sichere Verbindung gewährleistet werden.

Der Zapfen ist vorzugsweise etwa senkrecht zur Längsachse der Seele im Bereich derselben vor dem Verbindungsteil angeordnet. Die Betätigungsrichtung des Betätigungselements verläuft bevorzugt in einer Ebene parallel, aber leicht versetzt zur Längsachse der Seele.

Das Verbindungsteil ist vorzugsweise ein Kunststoff-Spritzgussteil, insbesondere aus PA oder POM.

Im folgenden wird die Erfindung anhand eines Ausführungsbeispiels unter Bezugnahme auf die Zeichnung im einzelnen erläutert. In der Zeichnung zeigen:
- Fig. 1: einen Schnitt durch einen erfindungsgemäßen Bowdenzug gemäß dem Ausführungsbeispiel in Explosionsdarstellung, und
- Fig. 2: eine Draufsicht auf Fig. 1.

Eine erfindungsgemäßer Bowdenzug 1 mit einer Seele 2 und einer optionalen Hülle 3, in der die Seele 2 entlang ihrer Längsachse verschiebbar geführt ist, weist an ihrem Ende ein Verbindungsteil 4 auf, mit dem die Seele 2 mit einem als Betätigungselement 5 dienenden Hebel verbunden wird. Die Seele 2 wird durch einen Draht aus Stahl gebildet und endet im Verbindungsteil 4, wobei sie hierin in einem 90°-Winkel umgebogen verläuft.

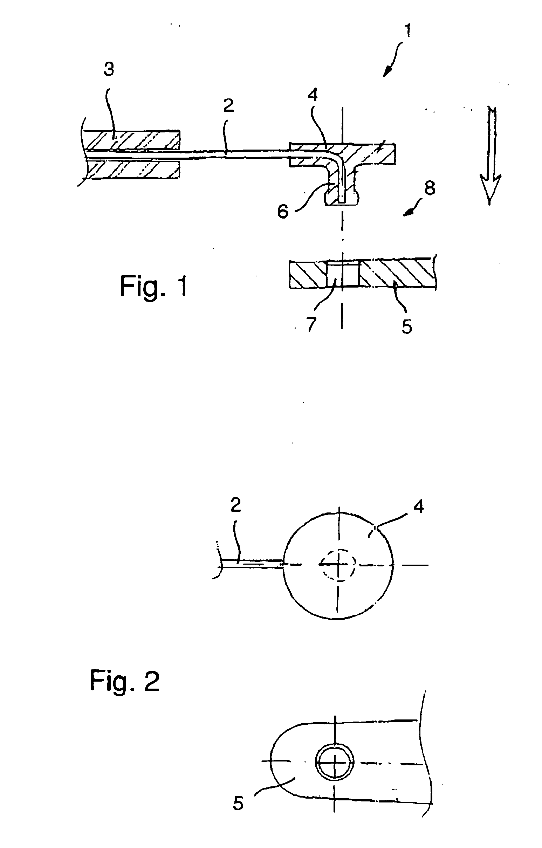

Das Verbindungsteil 4 besteht aus um die Seele 2 gespritzten Polyamid. Es weist einen quer zur Längsachse der Seele (in Hinblick auf den Bereich kurz vor dem Verbindungsteil 4) abstehenden Zapfen 6 auf, mit dem es in eine entsprechende Öffnung 7 im Hebel schwenkbar angebracht werden kann, vorliegend durch eine Art Clips-Verbindung 8. Die Montagerichtung ist in Fig. 1 durch einen Pfeil angedeutet, wobei der Zapfen 6 in die Montagerichtung weist. Die Seele 2 verläuft im Verbindungsteil 4 bis etwa zum äußeren Ende des Zapfens 6.

Durch den abgewinkelten Verlauf der Seele 2 im Verbindungsteil 4 gemäß dem vorliegenden Ausführungsbeispiel wird ein Abknicken der Seele 2 bei der Montage auf einfache Weise verhindert. Die Montage ist auf Grund der Clips-Verbindung 8 sehr einfach und kann sehr schnell ohne Hilfsmittel erfolgen. Das Verbindungsteil 4 selbst ist einfach und kompakt ausgestaltet. Lässt man die Seele 2 bis zum Ende des Zapfens 6 oder leicht darüber hinaus ragen, oder schneidet man den die Seele 2 bildenden Draht erst nach dem Spritzen des Verbindungsteils 4 ab, so kann eine sichere Verbindung gewährleistet werden.

### Bezugszeichenliste

- 1: Bowdenzug
- 2: Seele
- 3: Hülle
- 4: Verbindungsteil
- 5: Betätigungselement
- 6: Zapfen
- 7: Öffnung
- 8: Clips-Verbindung

## Patentansprüche

1. Bowdenzug mit beweglich geführter Seele (2), wobei die Seele (2) in ein Verbindungsteil (4) zur Anbringung an einem Betätigungselement (5) geführt und hierin befestigt ist, das Verbindungsteil einen Zapfen aufweist, der etwa senkrecht zur Längsachse der Seele im Bereich derselben vor dem Verbindungsteil angeordnet ist und das Verbindungsteil ein Kunststoff-Spritzgussteil ist, **dadurch gekennzeichnet, dass** die Seele (2) im Verbindungsteil (4) in einem Winkel gebogen verläuft und im Bereich des Verbindungsteils L-förmig in das Verbindungsteil eingespritzt ist.

2. Bowdenzug nach Anspruch 1, **dadurch gekennzeichnet, dass** der Winkel 90° +/- 10° beträgt.

3. Bowdenzug nach Anspruch 1 oder 2, **dadurch gekennzeichnet, dass** das Verbindungsteil (4) an dem Betätigungselement (5) schwenkbar angebracht ist.

4. Bowdenzug nach Anspruch 3, **dadurch gekennzeichnet, dass** das Verbindungsteil (4) einen Zapfen (6) aufweist, der in eine Öffnung im Betätigungselement (5) eingeführt und hierin schwenkbar angebracht ist.

5. Bowdenzug nach Anspruch 4, **dadurch gekennzeichnet, dass** die Seele (2) in den Zapfen (6) geführt ist.

6. Bowdenzug nach Anspruch 5, **dadurch gekennzeichnet, dass** die Seele (2) bis mindestens zum äußeren Ende des Zapfens (6) geführt ist.

7. Bowdenzug nach Anspruch 4, 5 oder 6, **dadurch gekennzeichnet, dass** der Zapfen (6) etwa senkrecht zur Längsachse der Seele (2) im Bereich derselben vor dem Verbindungsteil (4) angeordnet ist.

8. Bowdenzug nach einem der vorhergehenden Ansprüche, **dadurch gekennzeichnet, dass** die Betätigungsrichtung des Betätigungselements (5) in einer Ebene parallel, aber leicht versetzt zur Längsachse der Seele (2) verläuft.

9. Bowdenzug nach einem der vorhergehenden Ansprüche, **dadurch gekennzeichnet, dass** der Kunststoff PA oder POM ist.

## Claims

1. Bowden cable with a displaceably guided core (2), which core (2) is run into a connecting part (4) for mounting in an actuating element (5) and is secured therein, and the connecting part has a pin disposed more or less perpendicular to the longitudinal axis of the core in the region thereof before the connecting part and the connecting part is a plastic, injection-moulded part, **characterised in that** the core (2) runs through the connecting part (4) bent at an angle and is injection-moulded into the connecting part in an L-shaped arrangement in the region of the connecting part.

2. Bowden cable as claimed in claim 1, **characterised in that** the angle is 90° +/- 10°.

3. Bowden cable as claimed in claim 1 or 2, **characterised in that** the connecting part (4) is mounted on the actuating element (5) so as to be pivotable.

4. Bowden cable as claimed in claim 3, **characterised in that** the connecting part (4) has a pin (6), which is inserted in an orifice in the actuating element (5) and is mounted so as to be pivotable therein.

5. Bowden cable as claimed in claim 4, **characterised in that** the core (2) is run through the pin (6).

6. Bowden cable as claimed in claim 5, **characterised in that** the core (2) is run at least as far as the outer end of the pin (6).

7. Bowden cable as claimed in claim 4, 5 or 6, **characterised in that** the pin (6) is disposed approximately perpendicular to the longitudinal axis of the core (2) in the region thereof before the connecting part (4).

8. Bowden cable as claimed in one of the preceding claims, **characterised in that** the direction in which the actuating element (5) is actuated runs in a plane parallel with but slightly offset from the longitudinal axis of the core (2).

9. Bowden cable as claimed in one of the preceding claims, **characterised in that** the plastic is PA or POM.

## Revendications

1. Câble Bowden doté d'une âme (2) acheminée de façon mobile, l'âme (2) étant acheminée dans un raccord (4) à attacher à un élément de commande (5) et y étant fixée, le raccord présentant un pivot qui est placé sensiblement perpendiculairement à l'axe longitudinal de l'âme, dans la zone de celle-ci, en amont du raccord, et le raccord étant formée par une pièce moulée par injection plastique, **caractérisé en ce que** l'âme (2) passe de façon incurvée dans le raccord (4) suivant un angle et est injectée en forme de L dans le raccord, dans la zone du raccord.

2. Câble Bowden selon la revendication 1, **caractérisé en ce que** l'angle est de 90° +/- 10°.

3. Câble Bowden selon la revendication 1 ou 2, **caractérisé en ce que** le raccord (4) est fixé de façon pivotante à l'élément de commande (5).

4. Câble Bowden selon la revendication 3, **caractérisé en ce que** le raccord (4) présente un pivot (6) qui est introduit dans un orifice de l'élément de commande (5) et y est fixé de façon pivotante.

5. Câble Bowden selon la revendication 4, **caractérisé en ce que** l'âme (2) est acheminée dans le pivot (6).

6. Câble Bowden selon la revendication 5, **caractérisé en ce que** l'âme (2) est acheminée au moins jusqu'à l'extrémité extérieure du pivot (6).

7. Câble Bowden selon la revendication 4, 5 ou 6, **caractérisé en ce que** le pivot (6) est placé sensiblement perpendiculairement à l'axe longitudinal de l'âme (2), dans la zone de celle-ci, en amont du raccord (4).

8. Câble Bowden selon l'une quelconque des revendications précédentes, **caractérisé en ce que** le sens de commande de l'élément de commande (5) est dans un plan parallèle, mais légèrement décalé, à l'axe longitudinal de l'âme (2).

9. Câble Bowden selon l'une quelconque des revendications précédentes, **caractérisé en ce que** le plastique est du plastique PA ou du plastique POM.
